# EUROPÄISCHE PATENTANMELDUNG

(11) **EP 0 995 570 A1**
(43) Veröffentlichungstag der Anmeldung: **26.04.2000**
(21) Anmeldenummer: 98119332.9
(22) Anmeldetag: 13.10.1998
(51) Int. Cl.: B29C 45/14

(54) **Verfahren zum Erzeugen eines farbig dekorierten Spritzgussteiles**

(71) Anmelder: Bush Industries, Inc., Jamestown, N.Y. 14702-0460 (US)
(72) Erfinder: Walter, Thomas, Dr., 26133 Oldenburg (DE); Zaher, Maximilian, 26125 Oldenburg (DE)
(74) Vertreter: von Hellfeld, Axel, Dr. Dipl.-Phys.

(57) **Zusammenfassung**

Ein Verfahren zum Erzeugen eines farbig dekorierten Spritzgußteiles sieht folgende Schritte vor:
- mit "Release"-Technik wird ein Farbdekor auf eine Kunst stofffolie übertragen,
- die beschichtete Kunststofffolie wird in einer Spritzgußvorrichtung abgestützt,
- die Kunststofffolie wird in der Spritzgußvorrichtung mit Kunststoff hinterspritzt, und
- durch Temperaturerhöhung wird eine Diffusion von Farbstoff molekülen im Kunststoff durchgeführt.

## Beschreibung

Die Erfindung betrifft ein Verfahren zum Erzeugen eines farbig dekorierten Spritzgußteiles.

Ziel der Erfindung ist es, ein Verfahren bereitzustellen, mit dem Spritzgußteile hoher physikalischer und chemischer Qualität mit guter ästhetischer Wirkung erzeugt werden können. Die farbige Dekoration soll insbesondere eine hohe Festigkeit aufweisen und einen hochwertigen optischen Eindruck vermitteln.

Die Spritzgußtechnik als solche dient bekanntlich dazu, thermoplastische Formmassen in großen Serien zu verarbeiten. Thermoplastische Kunststoffe (Thermoplaste, Plastomere) erweichen beim Erwärmen und können im plastischen Zustand verformt werden. Bei Einsatz einer Kolbenspritzmaschine wird das Material aufgeheizt und, von Kolben vorplastifiziert, durch Kanäle oder Düsen in eine gekühlte Form gepresst. Bei Schneckenspritzgußmaschinen wird das Material gleichmäßig durch eine Schnecke plastifiziert und eine sehr homogene Temperaturverteilung erreicht, wobei die Schnecke wie ein Kolben wirkt und das Werkzeug füllt.

Die Erfindung erreicht das oben genannte Ziel mit zumindest folgenden Schritten:
a) Eine Kunststofffolie wird mit einem Farbdekor beschichtet,
b) die beschichtete Kunststofffolie wird in einer Spritzgußvorrichtung abgestützt,
c) die Kunststofffolie wird in der Spritzgußvorrichtung mit Kunststoff hinterspritzt, und
d) durch Temperaturerhöhung wird eine Diffusion von Farbstoffmolekülen im Kunststoff durchgeführt.

Mit dem erfindungsgemäßen Verfahren können insbesondere Spritzgußteile in großer Stückzahl kostengünstig und mit hoher Qualität hergestellt werden, insbesondere z. B. Autoteile, Gehäuse für elektronische Geräte, Platten und andere Elemente für die Bauindustrie etc.

Als Material für die mit einem Farbdekor zu versehende Kunststofffolie kommen insbesondere thermoplastische Kunststoffe in Betracht, insbesondere Polycarbonat und besonders bevorzugt Polymethylmetaacrylat (PMMA). Statt PMMA kann bevorzugt auch eine Folie aus Polyolefinen oder copolimeren Polyolefinen verwendet werden sowie Mischungen daraus. Besonders bevorzugt als Folienmaterial ist ein sog. Ethylen-Styrol-Interpolymer (ESI, eine Bezeichnung des Herstellers DOW-Chemical). Diese Folie ist ein copolimeres Polyolefin.

Die Schichtdicke der Kunststofffolie beträgt bevorzugt 50µm bis 500µm.

Um die Qualität der Farb-Dekorierung zu verbessern ist gemäß einem bevorzugten Ausführungsbeispiel der Erfindung vorgesehen, das Farbdekor mittels der sog. "Release"-Technik von einem Träger auf die genannte Kunststofffolie zu übertragen.

Die EP 0 573 676 A1 beschreibt die Verwendung eines Trägers mit "Release"-Eigenschaft zum Auftragen von Farbdekor auf ein Substrat. Bei diesem Stand der Technik wird zu diesem Zweck zunächst das Farbdekor auf einen Träger mit "Release"-Eigenschaft aufgebracht, danach über das auf den Träger aufgebrachte Farbdekor ein Lack aufgetragen, der Lack anschließend teilvernetzt und danach unter Druck und/oder erhöhter Temperatur der teilvernetzte Lack mitsamt dem Farbdekor vom Träger auf das letztlich zu dekorierende Substrat so übertragen, daß der Lack unter dem Farbdekor auf dem Substrat aufliegt. Abschließend erfolgt dort eine weitere Vernetzung des Lackes auf dem Substrat.

Träger mit "Release"-Eigenschaften sind als solche bekannt (vgl. EP 0 573 676 A1). Als flächige Träger mit "Release"-Eigenschaften kommen insbesondere in Betracht bestimmte Papiere oder auch Kunststofffolien, die an ihrer Oberfläche so gestaltet bzw. präpariert sind, daß unter bestimmten Bedingungen aufgetragene Farbschichten oder Lackschichten in der Art eines "Abpellens" (wie ein Abziehbild) auf einen Gegenstand oder eine Folie übertragbar sind. Für die hier vorliegende Erfindung kommen insbesondere als Träger mit "Release"-Eigenschaft Kunststofffolien in Betracht, wie insbesondere Polyesterfolien. Zur Förderung des Abpellens sind im Stand der Technik auch geeignete Trennschichten für die Folie mit "Release"-Eigenschaft bekannt.

Die Diffussion der Farbstoffmoleküle des Farbdekors erfolgt bevorzugt bei Temperaturen von 180°C bis 300°C, je nach den verwendeten Kunststoffen. Dabei erfolgt die Farbdiffusion sowohl in die Kunststofffolie (z.B. PMMA) als auch in den hinterspritzten Kunststoff. Die Farbdiffusion erzeugt eine Tiefenwirkung des sich ergebenden farbigen Dekors des Spritzgußteiles, da die Farbstoffmoleküle, je nach Molekulargewicht (Farbe), unterschiedliche Strecken im Kunststoff diffundieren. Dies ergibt ein ästhetisch ansprechenes, hochwertiges Dekor.

Die Temperaturerhöhung kann, zumindest teilweise, bereits während des Hinterspritzens durchgeführt werden oder danach.

Gemäß einer besonders bevorzugten Ausgestaltung der Erfindung ist vorgesehen, daß auf das auf der Kunststofffolie aufgetragene Farbdekor ein Lack aufgetragen wird. Der Lack ist bevorzugt gefärbt, d. h. er liefert für das Spritzgußteil eine Grundfarbe. In der Spritzgußvorrichtung liegt der Lack über dem Farbdekor und unter dem Farbdekor liegt die Kunststofffolie, d. h. der Lack ist direkt dem Spritzgußmaterial zugekehrt. Der Lack verleiht deshalb dem Spritzgußteil die Farbe und dieser Grundfarbe überlagert wird das diffundierende Farbdekor, das mehr oder weniger weit in die darüberliegende Kunstsstofffolie diffundiert.

Nachfolgend wird ein Ausführungsbeispiel der Erfindung anhand der Zeichnung näher erläutert. Es zeigt:
- Figur 1: schematisch eine Kunststofffolie mit aufgetragenem Farbdekor und darüberliegender Lackschicht; und
- Figur 2: schematisch eine Spritzgußvorrichtung mit dahin abgestützter Kunststofffolie gemäß Figur 1.

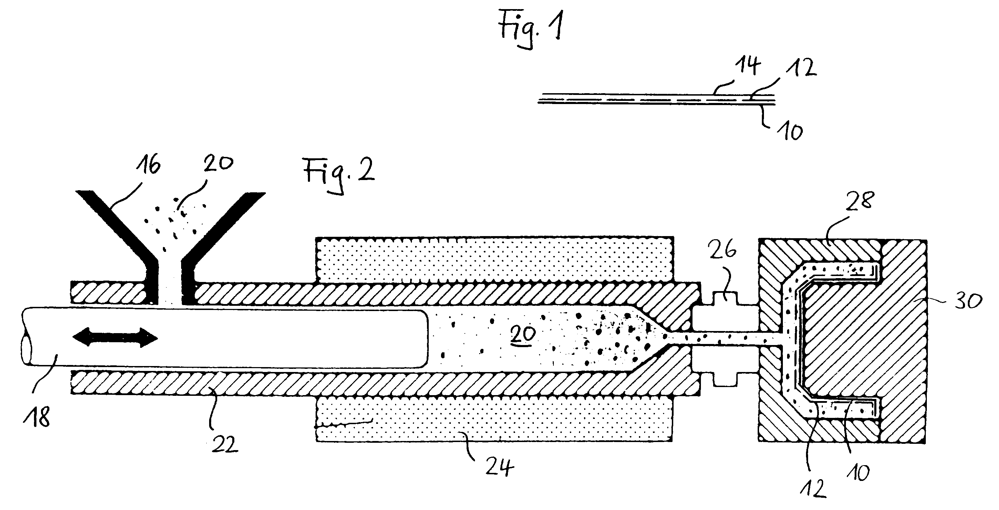

Eine Kunststofffolie 10 besteht beim dargestellten Ausführungsbeispiel aus Polymethylmetaacrylat (PMMA). Die Kunststofffolie 10 hat eine Schichtdicke von 50µm bis 500µm. Auf die Kunststofffolie 10 wird ein Farbdekor 12 aus diffundierbaren Farbstoffmolekülen aufgetragen. Die Aufbringung des Farbdekors 12 auf die Kunststofffolie 10 erfolgt mit der eingangs erwähnten "Release"-Technik. Hierzu wird das Farbdekor 12 zunächst auf einen Polyesterfilm (nicht gezeigt) gedruckt. Der Polyesterfilm hat gute "Release"-Eigenschaften. Das Farbdekor 12 wird dann vom Polyesterfilm auf den Kunststofffilm 10 gemäß Figur 1 durch "Abpellen" (Release) übertragen.

Danach wird über das Farbdekor 12 eine Lackschicht 14 aufgetragen.

Die so mit dem Farbdekor 12 und der Lackschicht 14 versehene Kunststofffolie 10 wird in eine Spritzgußvorrichtung gemäß Figur 2 eingespannt. In Figur 2 sind nur die Kunststofffolie 10 und das Farbdekor 12 gezeichnet, die Lackschicht 14 ist der Einfachheit halber in der Zeichnung weggelassen, sie ist aber tatsächlich vorhanden.

Die Spritzgußvorrichtung weist einen Aufgabetrichter 16 auf, in den thermoplastisches Kunststoffmaterial 20 in an sich bekannter Weise eingegeben wird. Die Spritzgußvorrichtung hat einen Kolben 18, der in Richtung des Pfeiles bewegbar ist. Die Spritzgußmasse 20 wird in einem Kanal 22 in der Figur von links nach rechts gefördert und dabei mittels eines Heizmittels 24 auf der Spritzgießtemperatur gehalten. Die Spritzgußmasse 20 wird durch ein Mundstück 26 in Formen 28, 30 injiziert. Diese Spritzgußtechnik ist als solche bekannt. In der Form 28, 30 ist die Kunststofffolie 10 mit dem daraufliegenden Dekor 12 und der darüberliegenden Lackschicht 14 abgestützt. Die Spritzgußmasse 20 wird hinter die Folie 10 hinterspritzt und erzeugt so das farbig dekorierte Spritzgußteil, wobei beim dargestellten Ausführungsbeispiel das Spritzgußteil schalenförmig ist und die farbige Dekorierung nur auf der Innenfläche der Schale entsteht. Das Verfahren ist geeignet, Spritzgußteile herzustellen, die wahlweise ganzflächig in der beschriebenen Weise farbig dekoriert sind.

Während oder nach dem Spritzgießen erfolgt eine Temperaturerhöhung, um eine Diffusion der Farbstoffmoleküle des Farbdekors 12 insbesondere in die Kunststofffolie 10 zu bewirken und so den oben erläuterten Tiefeneffekt der Farbdekorierung zu erreichen.

## Patentansprüche

1. Verfahren zum Erzeugen eines farbig dekorierten Spritzgußteiles mit zumindest folgenden Schritten:
a) Eine Kunststoffolie (10) wird mit einem Farbdekor (12) beschichtet,
b) die beschichtete Kunststofffolie (10) wird in einer Spritzgußvorrichtung (16-30) abgestützt,
c) die Kunststofffolie (10) wird in der Spritzgußvorrichtung mit Kunststoff (20) hinterspritzt, und
d) durch Temperaturerhöhung wird eine Diffusion von Farbstoffmolekülen im Kunststoff durchgeführt.

2. Verfahren nach Anspruch 1,
dadurch gekennzeichnet, daß
die Kunststofffolie (10) thermoplastisch ist.

3. Verfahren nach Anspruch 1,
dadurch gekennzeichnet, daß
die Kunststofffolie (10) Polycarbonat enthält.

4. Verfahren nach Anspruch 1,
dadurch gekennzeichnet, daß
die Kunststofffolie (10) Polymethylmethaacrylat (PMMA) zumindest als Bestandteil enthält.

5. Verfahren nach einem der vorhergehenden Ansprüche,
dadurch gekennzeichnet, daß
die Beschichtung gemäß Schritt a) durch Übertragung des Farbdekors (12) von einer Folie mit "Release"-Eigenschaft erfolgt.

6. Verfahren nach einem der vorhergehenden Ansprüche,
dadurch gekennzeichnet, daß
die Temperaturerhöhung auf 180°C bis 300°C erfolgt.

7. Verfahren nach einem der vorhergehenden Ansprüche,
dadurch gekennzeichnet, daß
während des Hinterspritzens eine Temperaturerhöhung erfolgt.

8. Verfahren nach einem der vorhergehenden Ansprüche,
dadurch gekennzeichnet, daß
die Kunststofffolie (10) eine Stärke von 50µm bis 500µm hat.

9. Verfahren nach einem der vorhergehenden Ansprüche,
dadurch gekennzeichnet, daß
nach Schritt a) ein Lack (14) auf das Farbdekor (12) aufgetragen wird.
